# EUROPÄISCHE PATENTSCHRIFT

(11) **EP 1 866 263 B1**
(45) Veröffentlichungstag und Bekanntmachung des Hinweises auf die Patenterteilung: **27.02.2013**
(21) Anmeldenummer: 06723723.0
(22) Anmeldetag: 21.03.2006
(51) Int. Cl.: C05F 3/00

(54) **VERFAHREN ZUR GEWINNUNG VON STICKSTOFFDÜNGER UND ZUR PHOSPHATENTFERNUNG AUS ORGANISCHEN ABFALLPRODUKTEN SOWIE ZUR BEGRENZUNG DES KALIUMGEHALTES**
METHOD FOR PRODUCING NITROGEN FERTILIZER, REMOVING PHOSPHATE FROM ORGANIC WASTE PRODUCTS, AND LIMITING THE POTASSIUM CONCENTRATION
PROCEDE DE PRODUCTION D'ENGRAIS AZOTES A PARTIR DE DECHETS ORGANIQUES, DE SUPPRESSION DE PHOSPHATES DE DECHETS ORGANIQUES ET DE LIMITATION DE LA TENEUR EN POTASSIUM

(30) Priorität: 08.04.2005 DE 102005017077
(43) Veröffentlichungstag der Anmeldung: 19.12.2007
(73) Patentinhaber: Phoenix Beteiligungs GmbH, 6858 Schwarzach (AT)
(72) Erfinder: SPINDLER, Herbert, 06120 Halle (DE); BAUERMEISTER, Ute, 04205 Leipzig (DE); MEIER, Thomas, 13583 Berlin (DE)
(74) Vertreter: Wablat, Wolfgang
(86) Internationale Anmeldenummer: PCT/EP2006/002744
(87) Internationale Veröffentlichungsnummer: WO 2006/105875

(56) Entgegenhaltungen:
- EP-A- 0 351 922
- EP-A- 0 498 337
- EP-A1- 0 522 966
- WO-A-99/42423
- DE-A1- 4 131 296
- GB-A- 111 845
- GB-A- 437 278
- GB-A- 437 652
- GB-A- 190 629 752
- US-A- 4 137 158
- US-B1- 6 218 174
- DATABASE WPI Week 197704 Derwent Publications Ltd., London, GB; AN 1977-06549Y XP002408651 & JP 51 142861 A (HITACHI LTD) 7. Dezember 1976 (1976-12-07)

## Beschreibung

Die Erfindung betrifft ein Verfahren zur Gewinnung von Stickstoffdünger aus organischen Abfallprodukten in flüssiger Phase, zur Phosphatentfernung und zur Begrenzung des Kaliumgehalts sowie zur Hygienisierung der Abfälle bzw. zur Emissionsverminderung durch thermische Behandlung unter Verwendung von mineralischen Zusätzen. Dabei wird das Abfallprodukt bei Unterdruck auf Temperaturen zwischen 40 °C und 90 °C erhitzt, das entweichende und Kohlendioxid und Ammoniak enthaltende Gas gekühlt und in eine mineralisch-wässrigegips Suspension eingeleitet bzw. damit in Kontakt gebracht. Der hierbei gebildete Stickstoffdünger wird ausgetragen und das nicht absorbierte und Kohlendioxid enthaltende Überschussgas im Kreislauf geführt und der zu Beginn des Prozesses durch eine Vakuumpumpe erzeugte Unterdruck wird durch den Verlauf des Prozesses autogen aufrecht erhalten. Das nicht absorbierte und Kohlendioxid enthaltende Überschussgas wird in den Kreislauf zurück geführt, indem es entweder direkt oberhalb des zu behandelnden Abfallproduktes oder über ein Gaskühlsystem oberhalb des zu behandelnden Abfallprodukts oder geteilt und ein Teilstrom durch das Abfallprodukt und ein weiterer Teilstrom oberhalb des Abfallproduktes eingeleitet wird.

Bekannt ist ein Verfahren zur Gewinnung von Stickstoffdünger aus organischen Abfallprodukten in flüssiger Phase sowie zur Hygienisierung der Abfälle und zur Emissionsminderung durch thermische Behandlung unter Verwendung von mineralischen oder organischen Zusätzen, bei dem das Abfallprodukt bei Unterdruck auf Temperaturen zwischen 40 ° und 90 °C erhitzt, das dabei entweichende und Kohlendioxid und Ammoniak enthaltende Gas gekühlt und in ein wässriges Absorptionsmittel eingeleitet bzw. mit ihm in Kontakt gebracht, der hierbei gebildete Stickstoffdünger ausgetragen und das nicht absorbierte und Kohlendioxid enthaltende Überschussgas in den Prozess zurückgeleitet wird, wobei der zu Beginn des Prozesses durch eine Vakuumpumpe erzeugte Unterdruck durch den Verlauf des Prozesses autogen aufrecht erhalten wird (WO 2005/043435. ; Stand der Technik gemäß Art 54(3) EPÜ)

Das nicht absorbierte und Kohlendioxid enthaltende Überschussgas kann dabei in den Kreislauf zurück geleitet werden, indem es entweder
- durch das zu behandelnde Abfallprodukt oder
- direkt oberhalb des zu behandelnden Abfallprodukts oder
- über das Gaskühlsystem oberhalb des zu behandelnden Abfallprodukts oder
- geteilt und ein Teilstrom durch das Abfallprodukt und ein weiter Teilstrom oberhalb des Abfallprodukts
eingeleitet wird.

Viele der diesem Verfahren unterworfenen Abfälle enthalten jedoch außerdem Phosphorverbindungen, die meist als Salze der Phosphorsäure (Phosphate) vorliegen. Diese Stoffe können beim Ausbringen der behandelten Abfallprodukte auf Felder zu einer schädlichen Überdüngung führen, weshalb es zweckmäßig ist, sie vorher abzutrennen.

Es gibt zahlreiche Verfahren, die eine Abtrennung von Phosphat aus Abfallprodukten erlauben. Es ist z. B. bekannt, Phosphat gemeinsam mit Ammonium als schwerlösliche Doppelverbindung MgNH₄PO₄*6H₂O (Struvit) auszufällen. Das Verfahren erfordert die Zugabe von Magnesiumverbindungen und die Einstellung sehr genau einzuhaltender Fällungsbedingungen, insbesondere eine Justierung des pH-Wertes (DE 3732896: Verfahren zur Eliminierung von Ammonium und Phosphat aus Abwasser und Prozesswasser, EP 335280: Verfahren zur Reinigung, insbes. zur kontinuierlichen Reinigung, von Abwasser mit hohem Gehalt an Ammonium-Ionen).

Diese Verfahren entsprechen aber nicht der Zielrichtung der vorliegenden Erfindung.

Es ist noch kein Verfahren bekannt, bei dem kleine Mengen von Phosphorverbindungen zusätzlich zum Ammonium-Stickstoff in einem Strippprozess abgetrennt werden ohne notwendigen Zusatz von Stoffen, die nicht bereits für den Stickstoffstrippprozess angewandt werden.

Ebenso ist noch kein einfaches Verfahren bekannt, bei dem der Gehalt an Kaliumverbindungen in einem organischen Abfallprodukt auf einen niedrigen Wert begrenzt werden kann. Die Abtrennung von Kalium ist deshalb so schwierig, weil die meisten einfachen Kaliumverbindungen, die als Kaliumsalze vorliegen, leicht, oft sogar sehr leicht in Wasser löslich sind.

Aufgabe der Erfindung ist es deshalb, die Phosphorverbindungen gemeinsam mit dem Ammoniumstickstoff in einem Verfahren abzuscheiden und den Gehalt an Kaliumsalzen auf einen für die weitere Verwendung des Ablaufs akzeptablen Wert zu begrenzen. Die Aufgabe besteht darin, einerseits stickstoffarme und praktisch phosphorfreie Abläufe mit einem begrenzten Kaliumgehalt zu gewinnen, die in der Land- oder Forstwirtschaft ausgebracht werden können, ohne Schäden für die Umwelt befürchten zu müssen, und andererseits einen wertvollen Stickstoff-Flüssigdünger und einen phosphathaltigen und gegebenenfalls kaliumhaltigen Festdünger als verkaufsfähige Produkte zu erhalten.

Erfindungsgemäß wird die Aufgabe dadurch gelöst, dass bei dem Verfahren nach DE 10 354 063 und 10 2004 053 297 bzw. WO 2005/049435 - mit dem Ziel der zusätzlichen Gewinnung von Phosphatdünger - das in der Vorlage gebildete, in einer festen und einer flüssigen Phase vorliegende Düngerprodukt in den Flüssig- und den Festanteil getrennt wird, der Festanteil ganz oder teilweise in den Strippbehälter zurückgeführt und das an Stickstoff- und Phosphorverbindungen abgereicherte flüssige Abfallprodukt abgekühlt, gegebenenfalls mit kohlendioxidhaltigem Gas behandelt und danach einer beliebigen Verwendung zugeführt wird. Sofern es ein Ablauf aus einem Biogasprozess ist, wird es teilweise in einen Fermenter bzw. Gärbehälter zurückgeführt.

Überraschender Weise werden dadurch die löslichen Phosphate fast vollständig ausgefällt. Dies konnte deshalb nicht erwartet werden, weil nach dem Stand der Technik (Weiland, P.: Umweltverträgliche Gülleaufbereitung und - verwertung, KTBL-Arbeitspapier 272, Darmstadt 1999) die chemische Fällung von Phosphaten erst im stark alkalischen Milieu gelingt. Deshalb wird dafür üblicherweise Kalkmilch eingesetzt, also die schwach wasserlösliche starke Lauge Ca(OH)₂ (Weiland, P.: Stand und Perspektive der Gülleaufbereitung. In: Umweltverträgliche Gülleaufbereitung und -Verwertung, KTBL-Arbeitspapier 242, Darmstadt 1997).

Es ist weiterhin Stand der Technik, die Phosphatfällung wegen der Gefahr erheblicher Ammoniakfreisetzung infolge der Erhöhung des pH-Wertes erst im Anschluss an Verfahrensschritte zur Stickstoffelimination erfolgen zu lassen.

Demgegenüber betrifft die vorliegende Erfindung ein Verfahren, das dadurch gekennzeichnet ist, dass zur Phosphatentfernung das in der Vorlage gebildete, in einer festen und einer flüssigen Phase vorliegende Düngerprodukt in den Flüssig- und den Festanteil getrennt wird, der Festanteil ganz oder teilweise in den Strippbehälter zurückgeführt wird, und das an Stickstoff- und Phosphorverbindungen abgereicherte flüssige Abfallprodukt abgekühlt, gegebenenfalls mit kohlendioxidhaltigem Gas behandelt und danach einer beliebigen Verwendung zugeführt wird.

Erfindungsgemäß wird als Fällungsmittel insbesondere der im Verfahren selbst erhaltene Düngekalk eingesetzt, der chemisch im wesentlichen Calciumcarbonat CaCO₃ ist, d. h. ein neutral reagierender und in Wasser und erst recht in leicht basisch reagierenden Abläufen praktisch unlöslicher Stoff. Da Calciumcarbonat extrem schwerlöslich ist, war nicht zu erwarten, dass damit Phosphate, die teilweise sogar etwas leichter wasserlöslich sind, ausgefällt werden können.

Unerwartet wurde weiterhin gefunden, dass die ganze oder teilweise Rückführung des Düngekalkes als eines der Hauptprodukte in den Strippbehälter den Effekt der Ammoniak-strippung noch erhöht.

Eine weitere Verbesserung und zweckmäßigere Ausgestaltung der Ammoniak-Strippung kann erreicht werden durch Zugabe einer kleinen Menge eines basischen Mineralmehles, z. B. Branntkalk, zum rückgeführten Produkt -dem Düngekalk- wofür schon 0,01 % bis 0,5 %, bezogen auf die Masse des zu behandelnden Abfallproduktes, ausreichen. Dieser Teilschritt des Verfahrens ist also dadurch gekennzeichnet, dass mit dem in den Strippbehälter zurückgeführten Produkt 0,01 bis 0,5 Masse-% eines basischen Mineralmehls zugegeben werden.

Die Zugabe einer noch größeren Menge des basischen Materials ist zwar möglich, verändert aber den Verlauf des Strippprozesses und sollte daher unterbleiben.

Bei der erfindungsgemäßen Verbesserung gelingt es durch eine relativ einfache Maßnahme, nicht nur zusätzlich zur Abtrennung des Ammonium-Stickstoffs aus dem Abfallprodukt praktisch den gesamten Phosphat-Phosphor abzuscheiden und in den Düngekalk zu überführen, sondern auch noch den Abscheidegrad des Ammoniums zu erhöhen. Der Phosphatgehalt wird mit dem erfindungsgemäßen Verfahren auf ≤10% des Anfangswertes erniedrigt, entsprechend einem Ausfällgrad von ≥90 %. Vorzugsweise wird ein Phosphatgehalt von ≤8% des Eingangswertes, entsprechend einem Ausfällgrad von ≥92 % erzielt. Höchst bevorzugt ist ein Phosphatgehalt von ≥6%, entsprechend einem Ausfällgrad von ≥94 %.

Ein weiterer unerwarteter Effekt trat bei Abläufen mit erhöhtem Kaliumgehalt über 1 Masse-% Kalium pro Liter auf. Es zeigte sich nämlich, dass bei gleichzeitiger Anwesenheit von Sulfat das ausgefallene Festprodukt signifikante Kaliummengen enthält. Wird dem rückgeführten Düngekalk (dem ganz oder teilweise in den Strippbehälter zurückgeführten Festanteil) eine sulfathaltige Verbindung zugesetzt, z.B. in Form von Gips, kann eine Begrenzung des Kaliumgehalts im flüssigen Ablauf auf ≤1 Masse-% erreicht werden. Diese Anwendung ist in Beispiel 4 näher beschrieben.

Dieser Teilschritt des Verfahrens ist also dadurch gekennzeichnet, dass zur Begrenzung des Kaliumgehalts dem ganz oder teilweise in den Strippbehälter zurückgeführten Festanteil mindestens eine sulfathaltige Verbindung zugesetzt wird.

Die sulfathaltige Verbindung wird so zugegeben, dass das Verhältnis der Stoffmengen Calcium in der mindestens einen sulfathaltigen Verbindung zu dem des Kaliums im Abfallprodukt 0,5 bis 3 beträgt.

In anderen Worten betrifft die Erfindung ein Verfahren, das dadurch gekennzeichnet ist, dass die mindestens eine sulfathaltige Verbindung so zugegeben wird, dass das Verhältnis der Stoffmengen Calcium in der mindestens einen sulfathaltigen Verbindung zu dem des Kaliums im Abfallprodukt 0,5 bis 3 beträgt.

Vorzugsweise wird die sulfathaltige Verbindung so zugegeben, dass das Verhältnis der Stoffmengen Calcium in der mindestens einen sulfathaltigen Verbindung zu dem des Kaliums im Abfallprodukt 1 bis 2 beträgt.

Dieser hervorgehobene Spezialfall des Verfahrens ist also dadurch gekennzeichnet, dass die mindestens eine sulfathaltige Verbindung so zugegeben wird, dass das Verhältnis der Stoffmengen Calcium in der mindestens einen sulfathaltigen Verbindung zu dem des Kaliums im Abfallprodukt 1 bis 2 beträgt.

Zwar steigt der Abscheidegrad des Kaliums mit dem Stoffmengenverhältnis Ca/K, aber mit steigenden Werten dieses Verhältnisses immer weniger, so dass ein Verhältnis Ca/K>3 zu keiner weiteren Verbesserung mehr führt.

Als einfachste Lösung der Auswahl der mindestens einen sulfathaltigen Verbindung hat sich die Verwendung von Gips bewährt.

Ein bevorzugter Fall des Verfahrens ist also dadurch gekennzeichnet, dass die mindestens eine sulfathaltige Verbindung Gips ist.

Die nach dem erfindungsgemäßen Verfahren ausgefällten letzten Festanteile, denen auch noch organische Bestandteile anhaften können, ergeben einen hervorragenden Mischdünger. Ein weiteres Kennzeichen der Erfindung ist also die Verwendung des aus dem Strippprozess gewonnenen letzten Festanteils als Phosphatdünger, als Kaliumdünger oder als gemischter Kalium- und Phosphatdünger bzw. als phosphat-und/oder kaliumhaltiger Dünger.

Die Durchführung des Verfahrens zur Begrenzung des Kaliumgehaltes in flüssigen Abfallprodukten ist nicht auf die vorhergehende Durchführung des Strippprozesses beschränkt, sondern kann auch auf Abläufe angewandt werden, bei denen die Reduzierung des Stickstoff- und/oder Phosphatgehaltes von geringem oder gar keinem Interesse ist. In diesem Sonderfall erübrigt sich auch die Kreislaufführung des Prozesses und die Anwendung von Unterdruck. Diese Anwendung, die zu einem an Kalium angereicherten Fällprodukt führt, ist in Vergleichsbeispiel 5 näher beschrieben.

In einem Spezialfall des Verfahrens können die Maßnahmen zur Begrenzung des Kaliumgehalts mit einem beliebigen flüssigen Abfallprodukt auch ohne ein vorgelagertes Strippverfahren oder nach einem solchen durchgeführt werden.

Die Abtrennung des Phosphates lässt sich noch dadurch verbessern, dass der dem Strippbehälter zugeführte Ablauf, der teilweise eine sehr hohe Viskosität aufweisen kann, vor der Behandlung durch Reduzierung des Feststoffanteils in einen niederviskosen und einen feststoffreichen Anteil separiert wird. Es ist zweckmäßig für die Verbesserung des erfindungsgemäßen Effektes, wenn der dünnflüssige Anteil eine dynamische Viskosität von weniger als 20 mPa s aufweist.

Dieser Teilschritt des Verfahrens ist also dadurch gekennzeichnet, dass die Viskosität des flüssigen Abfallproduktes vor der Behandlung durch Reduzierung des Feststoffanteils herabgesetzt wird.

Wenn das erfindungsgemäß zu behandelnde flüssige Abprodukt eine rohe oder fermentierte Gülle ist, kann deren dynamische Viskosität bei Raumtemperatur 40 bis 350 mPa s betragen. Durch handelsübliche Separatoren, wie z. B. Bogensiebe, Pressschnecken oder Zentrifugen, kann das flüssige Abprodukt mit geringem technischen Aufwand in einen dünnflüssigen und einen feststoffreichen Anteil getrennt werden. Es ist problemlos möglich, die Viskosität des Dünnproduktes auf 2 bis 7 mPa s zu senken, wobei für den erfindungsgemäßen Effekt eine Viskosität von < 20 mPa s zweckmäßig ist. Je nach angewandtem Trennverfahren und den Eigenschaften der Ausgangsprodukte verbleiben 5 bis 20 Volumen-% des eingesetzten Produktes beim Feststoffanteil, dessen Viskosität im allgemeinen die Messbereiche der üblichen Viskosimeter übersteigt.

Dieser Teilschritt des Verfahrens ist also dadurch gekennzeichnet, dass die Viskosität des flüssigen Abfallproduktes durch Separierung von Feststoffanteilen auf < 20mPa s vermindert wird.

Der feststoffreiche Anteil kann zu Kompost weiterverarbeitet oder einer anderen Verwendung zugeführt werden.

Eine weitere zweckmäßige Ausgestaltung des Verfahrens besteht darin, dass von dem gestrippten leicht alkalischen Ablauf die Festanteile abgetrennt werden, das verbleibende Flüssigprodukt mit kohlendioxidhaltigem Gas behandelt wird, bis ein pH-Wert < 8 erreicht ist und danach ein beliebiger Teil des so behandelten Ablaufs in den Fermentationsprozess zurückgeführt wird.

Ein weiterer Teilschritt des Verfahrens ist deshalb dadurch gekennzeichnet, dass von dem gestrippten leicht alkalischen Ablauf die Festanteile abgetrennt werden, das verbleibende Flüssigprodukt mit kohlendioxidhaltigem Gas behandelt wird, bis ein pH-Wert < 8 erreicht ist und danach ein beliebiger Teil des so behandelten Teil des so behandelten Ablaufs in den Fermentationsprozess zurückgeführt wird.

Der gestrippte Abfluss aus dem Strippbehälter wird durch einen weiteren Separator in einen dünnflüssigen Ablauf und einen phosphatreichen letzten Feststoffanteil getrennt, der direkt als Phosphordünger eingesetzt werden kann. Der leicht kaliumhaltige Flüssiganteil, der immer noch Düngereigenschaften besitzt, kann direkt auf die Felder ausgebracht werden. Es hat sich aber auch als günstig erwiesen, einen Teil davon, sofern es sich bei der die Erfindung betreffenden Vorrichtung um eine Biogasanlage handelt, in den Fermenter zurückzuführen. Dadurch wird unerwarteter Weise der Aufschluss des Gärsubstrates verbessert, wodurch wiederum die Viskosität des Ablaufs aus dem Biogasbehälter erniedrigt und der nachgeschaltete Strippprozess beschleunigt wird.

Die Erfindung ist nicht in ihrer Anwendung auf organische Abfallprodukte, wie z. B. Biogasgülle, beschränkt, sondern kann auch auf die Abtrennung der Phosphatfracht von anderen ammonium-, phosphat- und stärker kaliumhaltigen Abfallprodukten, wie z. B. bei kommunalen Abwässern, eingesetzt werden. Diese Anwendung ist deshalb vorteilhaft, weil dadurch der Einsatz starker Laugen und damit verbunden von teueren chemischen Fällungs- und Flockungsmitteln vermieden werden kann.

Die Vorrichtung zur Gewinnung von Stickstoffdünger besteht aus den wesentlichen Teilen Strippbehälter für Erwärmung unter Unterdruck, Vorlagebehälter für Reaktionen in heterogener Phase, Wärmespeicher zum Wärmeaustausch, Vakuumpumpe, Heizwasserpumpe, Umlaufventilator und Rührer mit zusätzlichem Gaskühlsystem mit aufsteigender Trennsäule und absteigendem Kühler und zusätzlichen Rohrleitungen und Kugelhähnen, damit das Kreislaufgas wahlweise an unterschiedlichen Stellen eingeleitet werden kann, und enthält erfindungsgemäß zusätzliche Vorrichtungen für die Trennung der flüssigen von den festen Düngeprodukten vor und nach dem Strippbehälter und die Rückführung sowohl des behandelten Abfallproduktes in den Fermenter (für den Fall einer vorgelagerten Biogaserzeugungsanlage) als auch des festen Düngerprodukts von der Vorlage in den Strippbehälter und eine Einrichtung für die Zugabe weiterer Zuschläge.

Die Vorrichtung nach WO 2005/043435 wird durch einen Absetzbehälter (Separator 24) komplettiert. Die wässrige Ammoniumsulfatlösung wird über den Ausfluss (25) abgezogen, der mit einer Pumpe (26) verbunden ist.

Das nach dem Abpumpen der Ammonsulfatlösung erhaltene schlammige Produkt wird ganz oder teilweise über die Leitung (27) oder eine andere Fördervorrichtung durch die Pumpe (28) am Zulauf der Phosphateinbindung (29) in den Strippbehälter (1) geleitet.

Durch den Zufluss (30) kann gegebenenfalls ein basischer Zuschlag zugegeben werden. Dies geschieht zweckmäßigerweise mit oder in Suspension mit einer Teilmenge des für die nächste Strippfahrt vorgesehenen zu behandelnden Abfallproduktes.

Nach dieser Strippfahrt wird das behandelte Abfallprodukt in den weiteren Separator (31) abgelassen und weiter über Abflüsse (32a, b) in herkömmlicher Weise der Festanteil von der Flüssigphase abgetrennt.

Ein 3. Separator (33) dient - wenn erforderlich - der Trennung des dem Strippbehälter (1) zuzuführenden Abfallproduktes in einen dünnflüssigen Anteil, der über den Zulauf (9a) nach (1) geleitet wird, und einen dickflüssigen Anteil, der über (9b) abgeführt wird.

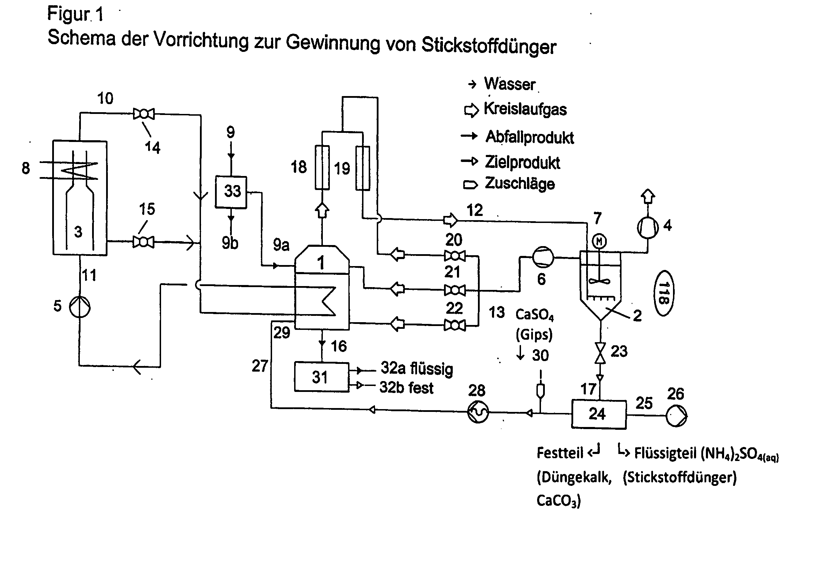

Fig. 1 zeigt beispielhaft das Schema der gesamten Vorrichtung zur Gewinnung von Stickstoffdünger (1 bis 23) mit den zusätzlichen Teilen zur Phosphatentfernung und zur Kaliumbegrenzung (24 bis 33).

### Darin bedeuten:

- 1: Strippbehälter für Erwärmung unter Unterdruck
- 2: Vorlagebehälter für Reaktion in heterogener Phase
- 3: Wärmespeicher zum Wärmeaustausch
- 4: Vakuumpumpe
- 5: Heizwasserpumpe
- 6: Umlaufventilator
- 7: Rührer
- 8: Wärmeüberträger
- 9: Zufuhr von Ablauf
- 9a: Ablauf, dünnflüssig
- 9b: Ablauf, dickflüssig
- 10: Ausgang des Heizwassers
- 11: Leitung für Rücklauf des Heizwassers
- 12: Leitung für Strippgas
- 13: Leitung für Rücklaufgas
- 14: Kugelhahn
- 15: Kugelhahn
- 16: Austrag Rückstand
- 17: Austrag Stickstoffdünger
- 18: Aufsteigender Teil des Kühlsystems (Trennsäule)
- 19: Absteigender Teil des Kühlsystems (Kühler)
- 20-22: Kugelhähne für Rücklaufgas
- 23: Absperrhahn
- 24: Separator
- 25: Ausfluss für Ammonsulfatlösung
- 26: Pumpe
- 27: Leitung für Rückführung
- 28: Pumpe
- 29: Zulauf für Phosphateinbindung bzw. zur Begrenzung des Kaliumgehaltes
- 30: Zufluss für Zuschläge
- 31: Separator
- 32a: Abfluss, Flüssigprodukt
- 32b: Abfluss, Festprodukt
- 33: Separator, wenn erforderlich

Die Vorrichtung zur Gewinnung von Stickstoffdünger, zur Phosphatentfernung und zur Begrenzung des Kaliumgehalts, besteht also aus den wesentlichen Teilen Strippbehälter (1) für Erwärmung unter Unterdruck, Vorlagebehälter für Reaktionen in heterogener Phase (2), Wärmespeicher zum Wärmetausch (3), Heizwasserpumpe (5), Umlaufventilator (6) und Rührer (7) mit zusätzlichem Gaskühlsystem mit aufsteigender Trennsäule (18) und absteigendem Kühler (19) und zusätzlichen Rohrleitungen und Kugelhähnen, damit das Kreislaufgas wahlweise an unterschiedlichen Stellen eingeleitet werden kann, dadurch gekennzeichnet, dass sie zusätzliche Vorrichtungen (24) (31) und ggfs. (33) für die Trennung der flüssigen von den festen Düngeprodukten vor und nach dem Strippbehälter (1) und die Rückführung sowohl des behandelten Abfallproduktes in den Fermenter (für den Fall einer vorgelagerten Biogaserzeugungsanlage) als auch des festen Düngerprodukts von der Vorlage in den Strippbehälter und eine Einrichtung für die Zugabe weiterer Zuschläge (30) enthält.

Die Erfindung wird durch folgende Beispiele näher beschrieben, ohne darauf beschränkt zu sein.

### Beispiel 1 (Vergleichsbeispiel)

Der Strippprozess wird wie in DE 103 54 063 bzw. WO 2005/043435 beschrieben durchgeführt. Dabei werden in den Strippbehälter (1) 250 l Ablauf-Gülle mit einem Gehalt von 4,8 g/l Ammonium, also insgesamt 1,2 kg, vorgelegt und dem Strippprozess unterworfen. Im Vorlagebehälter (2) wird eine wässrige Suspension von REA-Gips vorgelegt, deren Gehalt an reinem Calciumsulfat, CaSO₄, 3,5 kg beträgt. Es werden durch den Strippprozess 850 g Ammoniak, entsprechend 900 g Ammonium, ausgetrieben und mit dem Gips zu 3,3 kg Ammoniumsulfat und 2,5 kg Düngekalk, berechnet auf Calciumcarbonat, CaCO₃ umgesetzt. Das entspricht einem Strippgrad von 75 % des im Behälter (1) vorgelegten Ammonium-Stickstoffs.

Außerdem enthält die Vorlage (2) noch 10 kg Wasser, das insgesamt aus dem mit dem Strippprozess übergetretenen Kondensat, der Anmaischflüssigkeit für den Gips und dem Kristallwasser des Gipses resultiert. Der Phosphatgehalt des Düngekalks liegt unter der Nachweisgrenze. Die eingesetzte Ablaufgülle enthielt 545 mg/l Phosphat. Durch den Strippprozess hat sich der Phosphorgehalt wegen der Aufkonzentrierung durch den Wasseraustrag geringfügig auf 555 mg/l erhöht.

### Beispiel 2

Der Strippprozess wird analog Beispiel 1 durchgeführt, aber mit dem Unterschied, dass der in der Vorlage (2) im vorhergehenden Batchprozess angefallene Düngekalk in den Strippbehälter (1) zurückgeführt wurde. Die in der Vorlage vorgelegte Suspension an REA-Gips enthält 3,8 kg CaSO₄, die sich zu 2,7 kg Düngekalk, berechnet als CaCO₃, umsetzen. In dem Vorlagebehälter fallen 3,5 kg Ammoniumsulfat in wässriger Lösung an entsprechend einem Strippgrad von 80 %.

Das gebildete Düngergemisch wird über den Abfluss (23) in den Absetzbehälter (Separator 24) ausgetragen. Nach kurzer Absetzzeit hat sich der feste Düngekalk von der wässrigen Ammonsulfatlösung getrennt, und diese wird über den Abfluss (25) in übliche Container abgelassen. Über den Zufluss (30) wird eine geringe Menge des in der nächsten Strippfahrt zu behandelnden flüssigen Abfallproduktes, z. B,. ausgegorene Biogasgülle, zu dem Düngekalk zugegeben, um diesen zu einem pumpfähigen Schlamm anzumaischen, der dann mittels der Pumpe (28) über die Leitung (27) in den Behälter (1) gefördert wird. Nach der nächsten Strippfahrt wird der eben beschriebene mineralische Zusatz gemeinsam mit dem ausgefällten Phosphat in herkömmlicher, an sich bekannter Weise von dem behandelten Flüssigprodukt getrennt.

Der Phosphatgehalt der Gülle in (1) hat sich auf 40 mg/l erniedrigt, entsprechend einem Ausfällgrad von 92 %. Das abgetrennte Phosphat befindet sich vollständig in dem aus der behandelten Ablaufgülle abgetrennten Düngekalk.

### Beispiel 3

Der Strippprozess wird analog Beispiel 2 durchgeführt, aber mit dem Unterschied, dass dem in dem Absetzbehälter (Separator 24) abgesetzten Düngekalk mit dem Anmaischen 0,5 kg Branntkalk zugesetzt und dann über die schon beschriebene Leitung (27) in den Behälter (1) zurückgeführt wurden.

Es wurden als Abfallprodukt 280 l einer Ablauf-Gülle aus einer Biogasanlage mit einer dynamischen Viskosität von 95 mPa s bei 20 °C verwendet und mittels des Separators (33) 250 l einer Dünngülle mit einer Viskosität von 7 mPa s gewonnen und über die Ablaufleitung 9a in den Strippbehälter (1) geleitet. Durch diese Maßnahme wurde der Strippprozess von 3 auf 2 Stunden verkürzt.

Der abgetrennte Feststoffanteil wurde einer Kompostierung zugeführt.

In den Vorlagebehälter (2) waren 3,9 kg REA-Gips eingetragen worden, berechnet auf reines CaSO₄. Es fielen 2,8 kg Düngekalk, berechnet auf CaCO₃, an sowie 3,7 kg Ammoniumsulfat in wässriger Lösung, entsprechend einem Strippgrad von 84 %.

Der Phosphatgehalt der Gülle in (1) hat sich auf 35 mg/l erniedrigt, entsprechend einem Ausfällgrad von 94 %. Das abgetrennte Phosphat befindet sich vollständig in dem aus der behandelten Ablaufgülle zurückgeführten Düngekalk.

### Beispiel 4

Der Strippprozess wird analog zu Beispiel 2 mit 250 l Ablauf durchgeführt, aber mit dem Unterschied, dass dem in dem Absetzbehälter (24) abgesetzten Düngekalk mit dem Anmaischen 10 kg Calciumsulfat, berechnet als CaSO₄, in Form von REA-Gips zugesetzt und dann über die schon beschriebene Leitung (27) in den Behälter (1) zurückgeführt wurden. Die eingesetzte Ablaufgülle enthielt 945 mg/l Phosphat und 23g/l Kalium. Das Stoffmengenverhältnis Ca/K, berechnet auf den zugesetzten REA-Gips, betrug 0,5.

Durch die angegebene Behandlung hat sich der Phosphatgehalt um 95% auf 47 mg/l Ablauf erniedriegt, der Kaliumgehalt auf 16 g/l. Die Differenzmengen befinden sich im festen Fällprodukt.

### Beispiel 5 (Vergleichsbeispiel)

Es wurden (analog zu den vorhergehenden Beispielen) 250 l eines flüssigen Abfallproduktes eingesetzt, das 20 g Kalium pro Liter enthielt. Diesem Ablauf wurden 20 kg Calciumsulfat, berechnet als CaSO₄, in Form von REA-Gips in einer üblichen Rührapparatur bei Raumtemperatur und Normaldruck zugemischt. Das Stoffmengenverhältnis Ca/K betrug danach 1,1. Es fiel nach kurzer Zeit ein Kristallisat aus, das nach Trocknen bei 105°C eine Masse von 30 kg aufwies und 6,7 Masse-% Kalium enthielt. Der vom Feststoff separierte Ablauf hatte einen Restgehalt von 11,9 g Kalium pro Liter.

## Patentansprüche

1. Verfahren zur Gewinnung von Stickstoffdünger aus organischen Abfallprodukten (9) in flüssiger Phase und zur Phosphatentfernung sowie zur Hygienisierung der Abfälle und zur Emissionsminderung durch thermische Behandlung unter Verwendung von mineralischen Zusätzen, wobei das Abfallprodukt in einem Strippbehälter (1) bei Unterdruck auf Temperaturen zwischen 40 °C und 90 °C erhitzt, das entweichende und Kohlendioxid und Ammoniak enthaltende Gas (12) gekühlt (18,19) und in eine mineralisch-wässrige Gips-Suspension (2) eingeleitet bzw. damit in Kontakt gebracht, und das nicht absorbierte und Kohlendioxid enthaltende Überschussgas im Kreislauf (6) geführt und der zu Beginn des Prozesses durch eine Vakuumpumpe (4) erzeugte Unterdruck durch den Verlauf des Prozesses autogen aufrecht erhalten wird und das nicht absorbierte und Kohlendioxid enthaltende Überschussgas in den Kreislauf (6) zurück geführt wird, indem es entweder direkt oberhalb des zu behandelnden Abfallproduktes (21) oder über ein Gaskühlsystem oberhalb des zu behandelnden Abfallprodukts (20) oder geteilt und ein Teilstrom durch das Abfallprodukt (22) und ein weiterer Teilstrom oberhalb des Abfallproduktes (21) eingeleitet wird,
wobei zur Phosphatentfernung das in der Vorlage (2) gebildete, in einer festen und einer flüssigen Phase vorliegende Düngerprodukt in den Flüssig- und den Festanteil getrennt wird, der Flüssigteil (25), d.h. der hierbei gebildete Stickstoffdünger, welcher eine wässrige Ammoniumsulfatlösung umfasst, ausgetragen, der Festanteil (27) ganz oder teilweise in den Strippbehälter (1) zurückgeführt wird, und
zur Begrenzung des Kaliumgehaltes dem ganz oder
teilweise in den Strippbehälter (1) zurückgeführten Festanteil (27) mindestens eine sulfathaltige Verbindung (30) zugesetzt wird
und das an Stickstoff- und Phosphorverbindungen abgereicherte flüssige Abfallprodukt (16) in einem, dem Strippbehälter (1) nachgeschalteten Separator (31) vom festen Fällprodukt abgetrennt, und danach einer beliebigen Verwendung zugeführt wird
und
das dadurch gewonnene abgetrennte feste Fällprodukt (32b) und dieses sowie der verbleibende Flüssigteil (32a) einer weiteren Verwendung zugeführt wird, wobei die Maßnahmen zur Begrenzung des Kaliumgehalts mit einem beliebigen flüssigen Abfallprodukt auch nach einem Strippverfahren durchgeführt werden können.

2. Verfahren nach Anspruch 1, **dadurch gekennzeichnet, dass** die Viskosität des flüssigen Abfallproduktes vor der thermischen Behandlung durch Reduzierung des Feststoffanteils herabgesetzt wird.

3. Verfahren nach einem der Ansprüche 1 oder 2, **dadurch gekennzeichnet, dass** die Viskosität des flüssigen Abfallproduktes durch Separierung von Feststoffanteilen auf < 20 mPa s vermindert wird.

4. Verfahren nach einem der Ansprüche 1 bis 3, **dadurch gekennzeichnet, dass** mit dem in den Strippbehälter (1) zurückgeführten Produkt 0,01 bis 0,5 Masse-% eines basischen Mineralmehls zugegeben werden.

5. Verfahren nach einem der Ansprüche 1 bis 4, **dadurch gekennzeichnet, dass** die mindestens eine sulfathaltige Verbindung so zugegeben wird, dass das Verhältnis der Stoffmengen Calcium in der mindestens einen sulfathaltigen Verbindung zu dem des Kaliums im Abfallprodukt 0,5 bis 3 beträgt.

6. Verfahren nach einem der Ansprüche 1 bis 5, **dadurch gekennzeichnet, dass** die mindestens eine sulfathaltige Verbindung so zugegeben wird, dass das Verhältnis der Stoffmengen Calcium in der sulfathaltigen Verbindung zu dem des Kaliums im Abfallprodukt 1 bis 2 beträgt.

7. Verfahren nach einem der Ansprüche 1 bis 6, **dadurch gekennzeichnet, dass** die sulfathaltige Verbindung Gips ist.

8. Verfahren nach einem der Ansprüche 1 bis 7, **dadurch gekennzeichnet, dass** das an Stickstoff- und Phosphorverbindungen abgereicherte flüssige Abfallprodukt mit kohlendioxidhaltigem Gas behandelt wird.

9. Verfahren nach einem der Ansprüche 1 bis 8, **dadurch gekennzeichnet, dass** von dem gestrippten leicht alkalischen Ablauf die Festanteile abgetrennt werden, das verbleibende Flüssigprodukt mit kohlendioxidhaltigem Gas behandelt wird, bis ein pH-Wert < 8 erreicht ist und danach ein beliebiger Teil des so behandelten Ablaufs in den Fermenter eines vorangegangenen Biogasprozesses zurückgeführt wird.

## Claims

1. A method for producing nitrogen fertilizer from organic waste products (9) in the liquid phase and for removing phosphate as well as for sanitizing the waste and for reducing emissions by heat treatment using mineral additives, wherein the waste product is heated to temperatures between 40°C and 90°C under negative pressure in a stripping tank (1), the gas (12) which escapes, and which contains carbon dioxide and ammonia, is cooled (18, 19) and introduced into a mineral-aqueous gypsum suspension (2) or respectively brought into contact with said suspension, and the non-absorbed excess gas, which contains carbon dioxide is recirculated (6) and the negative pressure generated by a vacuum pump (4) at the beginning of the process is maintained in an autogenous manner throughout the course of the process and the non-absorbed excess gas, which contains carbon dioxide is recirculated (6) either by introducing it above over the waste product to be treated (21) or via a gas cooling system above the waste product to be treated (20) or by splitting it and introducing a part stream through the waste product (22) and introducing a further part stream above the waste product (21), wherein for phosphate removal, the fertilizer product formed in the receiver tank (2) and present in a solid and a liquid phase is separated into the liquid and the solid fraction, the liquid fraction (25), i.e. the nitrogen fertilizer formed therein, which comprises an aqueous ammonium sulphate solution, is removed, part or all of the solid fraction (27) is returned to the stripping tank (1) and in order to limit the potassium concentration at least one sulphate-containing compound (30) is added to the solid fraction (27) all or part of which is returned to the stripping tank (1), and the liquid waste product (16), which has been stripped of nitrogen and phosphorus compounds is separated from the solid precipitate product in a separator (31), which is downstream of the stripping tank (1), and subsequently put to any desired use, and the separated solid precipitate product (32b) obtained thereby as well as the remaining liquid fraction (32a) are put to further use, wherein the provisions for limiting the potassium content can be implemented with any liquid waste product, even after a stripping process.

2. The method according to claim 1, **characterized in that** the viscosity of the liquid waste product is lowered by reducing the solids content prior to the heat treatment.

3. The method according to claim 1 or claim 2, **characterized in that** the viscosity of the liquid waste product is lowered to < 20 mPa.s by separating solid portions.

4. The method according to any one of claims 1 to 3, **characterized in that** 0.01 to 0.5 percent by weight of a basic mineral meal is added with the product returned to the stripping tank (1).

5. The method according to any one of claims 1 to 4, **characterized in that** the at least one sulphate-containing compound is added such that the molar ratio of the quantity of calcium in the at least one sulphate-containing compound to that of potassium in the waste product is in the range of 0.5 to 3.

6. The method according to any one of claims 1 to 5, **characterized in that** the at least one sulphate-containing compound is added such that the molar ratio of the quantity of calcium in the sulphate-containing compound to that of potassium in the waste product is in the range of 1 to 2.

7. The method according to any one of claims 1 to 6, **characterized in that** the sulphate-containing compound is gypsum.

8. The method according to any one of claims 1 to 7, **characterized in that** the liquid waste product stripped of nitrogen and phosphorus compounds is treated with gas, which contains carbon dioxide.

9. The method according to any one of claims 1 to 8, **characterized in that** the solid portions in the stripped, slightly alkaline effluent are separated out, the remaining liquid product is treated with gas, which contains carbon dioxide until a pH value of < 8 is reached and subsequently, a desired portion of the effluent treated in this manner is returned to the fermenter of an upstream biogas process.

## Revendications

1. Procédé destiné à obtenir de l'engrais azoté à partir de déchets organiques (9) en phase liquide et à éliminer le phosphate, ainsi qu'à rendre lesdits déchets plus hygiéniques et à réduire les émissions par un traitement thermique, en mettant en oeuvre des additifs minéraux, le produit des déchets étant réchauffé dans un récipient d'extraction par épuisement (1) sous dépression, à des températures comprises entre 40°C und 90 °C, le gaz (12) qui s'échappe et qui contient du dioxyde de carbone et de l'ammoniac étant refroidi (18, 19) et introduit dans ou mis en contact avec une suspension minérale aqueuse de plâtre (2) et le surplus de gaz non absorbé et contenant du dioxyde de carbone étant guidé dans le circuit (6) et la dépression créée au début du processus par une pompe à vide (4) étant maintenue de manière autogène par le déroulement du processus et le surplus de gaz non absorbé et contenant du dioxyde de carbone étant recyclé dans le circuit (6) en étant introduit soit directement au-dessus du produit des déchets (21) à traiter ou via un système de refroidissement du gaz au-dessus du produit des déchets (20) à traiter ou divisé et un flux partiel étant introduit à travers le produit des déchets (22) et un autre flux partiel au-dessus du produit des déchets (21), pour éliminer le phosphate, l'engrais formé dans le récipient (2), présent dans une phase solide et dans une phase liquide étant séparé dans la fraction liquide et dans la fraction solide, la fraction liquide (25), c'est à dire l'engrais azoté formé à cet effet qui comprend une solution aqueuse de sulfate d'ammonium étant évacué, la fraction solide (27) étant recyclée en totalité ou en partie dans le récipient d'extraction par épuisement (1) et pour limiter la teneur en potassium, au moins un composé sulfaté (30) étant ajouté à la fraction solide (27) recyclée en totalité ou en partie dans le récipient d'extraction par épuisement (1)
et le produit des déchets liquides (16) appauvri en azote et en composés phosphorés étant séparé du produit de précipitation dans un séparateur (31) monté en aval du récipient d'extraction par épuisement (1) et amené ensuite vers une utilisation quelconque
et le produit de précipitation (32b) solide séparé, obtenu à cet effet et ce dernier, ainsi que la fraction liquide restante (32a) étant amenés vers une autre utilisation, les actions pour limiter la teneur en potassium pouvant être réalisées avec un produit liquide quelconque des déchets également après le procédé d'extraction par épuisement.

2. Procédé selon la revendication 1, **caractérisé en ce qu'**on abaisse par réduction de la fraction solide la viscosité du produit liquide des déchets avant le traitement thermique.

3. Procédé selon l'une quelconque des revendications 1 ou 2, **caractérisé en ce qu'**on réduit la viscosité du produit liquide des déchets par séparation de fractions solides à < 20 mPa s.

4. Procédé selon l'une quelconque des revendications 1 à 3, **caractérisé en ce qu'**avec le produit amené dans le récipient d'extraction par épuisement (1), on ajoute de 0,01 à 0,5 % en masse d'une farine minérale basique.

5. Procédé selon l'une quelconque des revendications 1 à 4, **caractérisé en ce qu'**on rajoute l'au moins un composé sulfaté de telle sorte que le rapport des quantités de substance calcium dans le composé sulfaté à celui du potassium dans le produit des déchets soit de 0,5 à 3.

6. Procédé selon l'une quelconque des revendications 1 à 5, **caractérisé en ce qu'**on rajoute l'au moins un composé sulfaté de telle sorte que le rapport des quantités de substance calcium dans le composé sulfaté à celle du potassium dans le produit des déchets soit de 1 à 2.

7. Procédé selon l'une quelconque des revendications 1 à 6, **caractérisé en ce que** le composé sulfaté est du plâtre.

8. Procédé selon l'une quelconque des revendications 1 à 7, **caractérisé en ce qu'**on traite au gaz contenant du dioxyde de calcium le produits liquide des déchets appauvri en azote et en composés phosphorés.

9. Procédé selon l'une quelconque des revendications 1 à 8, **caractérisé en ce qu'**on sépare les fractions solides de l'écoulement extrait par épuisement, légèrement alcalin, on traite le produit liquide restant avec du gaz contenant du dioxyde de carbone, jusqu'à l'obtention d'une valeur pH < 8 et on amène ensuite une fraction quelconque de l'écoulement ainsi traité dans le fermenteur d'un processus précédent de biogaz.
